# EUROPEAN PATENT APPLICATION

(11) **EP 1 995 616 A1**
(43) Date of publication of application: **26.11.2008**
(21) Application number: 08156498.1
(22) Date of filing: 19.05.2008
(51) Int. Cl.: G02B 6/42

(54) **Removable fiber optic insert**

(30) Priority: 21.05.2007 US 751462
(71) Applicant: Honeywell International Inc., Morristown NJ 07960 (US)
(72) Inventor: Niewiadomski, Walter, Redmond, WA 98073 (US)
(74) Representative: Buckley, Guy Julian

(57) **Abstract**

A fiber-optic module attachment system. The system includes a back plane circuit card assembly (CCA), a fiber-optic module having a plurality of external pins located on a first side, and a connector housing. The connector housing includes a plurality of holes and is attached to a first side of the back plane CCA. An optical module socket is attached to the first side of the back plane CCA. The optical module socket includes a plurality of pin receptacles and electrical traces that electrically attach the pin receptacles to corresponding electrical traces on the back plane CCA. The one or more pins of the fiber-optic module are removably received by at least a portion of the plurality of receiving holes of the optical module socket.

## Description

### BACKGROUND OF THE INVENTION

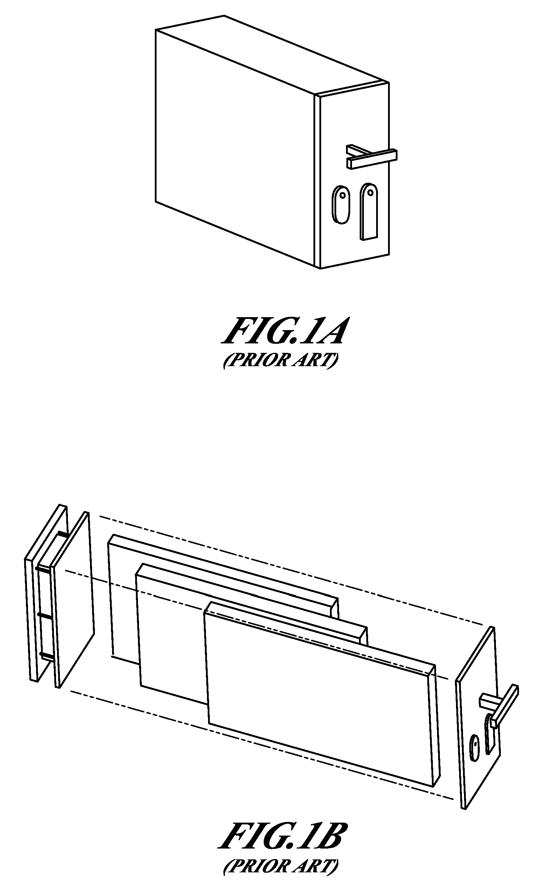

In some avionics designs, line replaceable units (LRU) include a fiber-optic module for increasing data transmission and reception by the LRU. The fiber-optic modules provide a high speed fiber optical interface between the LRU and other aircraft systems. For data transmission, the fiber optic interface module converts electrical signals to optical signals. For data reception, the optical module converts optical signals to electrical signals. Fiber-optic modules are not maintenance free, however. FIGURES 1A and B illustrate a chassis that includes multiple LRUs (circuit boards). In this aviation application the LRUs and interface components comply with ARINC600. The back side of the chassis includes a rear interconnect (back plane) circuit card assembly (CCA) that receives multiple circuit boards and provides interconnections with sockets or leads on an opposing side of the back plane panel through a connector housing and the rear plate assembly of the chassis. Presently, the fiber-optic module is soldered to an optical back plane CCA. Therefore, in order for one to remove and replace a faulty fiber-optic module, they would need to disassemble the chassis, remove the LRUs from the chassis, remove the optical back plane CCA with the soldered optical module, and then replace it with a new optical back plane CCA and optical module. Then they would have to reassemble the whole package, retest and resubmit for environmental stress screening (ESS) testing or other standardized testing. This significantly increases service time, test time and likelihood of a secondary failure, thereby producing significant maintenance costs.

Therefore, there exists a need for reducing service time, test time, cost and reliability of maintenance of optical modules in avionic systems.

### SUMMARY OF THE INVENTION

The present invention provides a fiber-optic module attachment system. The system includes a back plane CCA, a fiber-optic module having a plurality of external pins located on a first side, and a connector housing. The connector housing includes a plurality of holes and is attached to a first side of the back plane plate. An optical module socket is attached to the first side of the back plane CCA. The optical module socket includes a plurality of receiving holes and electrical traces that electrically attach the holes to corresponding electrical traces on the back plane plate. The one or more pins of the fiber-optic module are removably received by at least a portion of the plurality of receiving holes of the optical module socket.

In another aspect of the invention, the fiber-optic module is inserted and extracted from the connector housing using an extraction tool without causing damage to the fiber-optic module.

In still another aspect of the invention, the connector housing complies with ARINC requirements.

In yet another aspect of the invention, the back plane CCA is part of a chassis that houses one or more line replaceable units (LRUs).

The present invention allows insertion and extraction of optical modules without disassembling an LRU chassis. This significantly reduces the cost and duration of repairing optical interface modules. The enables manufacturing and service operators to avoid the costs associated with disassembling the unit, desoldering the optical interface module, installing the new optical interface module, testing the sub-assembly, reassembling the LRU, retesting the LRU, and reverifying manufacturing workmanship.

### BRIEF DESCRIPTION OF THE DRAWINGS

Preferred and alternative embodiments of the present invention are described in detail below with reference to the following drawings:

FIGURE 1A illustrates a perspective view of an electronics chassis formed in accordance with the prior art;

FIGURE 1B illustrates a partial exploded view of the electronics chassis of FIGURE 1A;

FIGURE 2A illustrates a perspective view of an optical module connector assembly formed in accordance with the embodiment of the present invention;

FIGURE 2B illustrates an exploded view of the system shown in FIGURE 2A; and

FIGURE 3 illustrates a side cutaway view of the system shown in FIGURE 2A.

### DETAILED DESCRIPTION OF THE PREFERRED EMBODIMENT

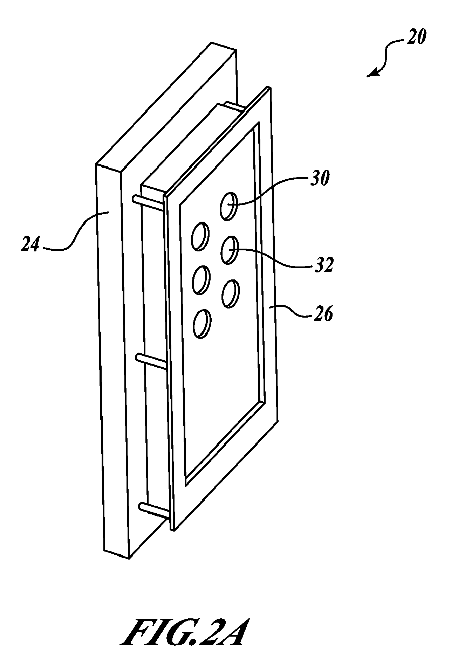

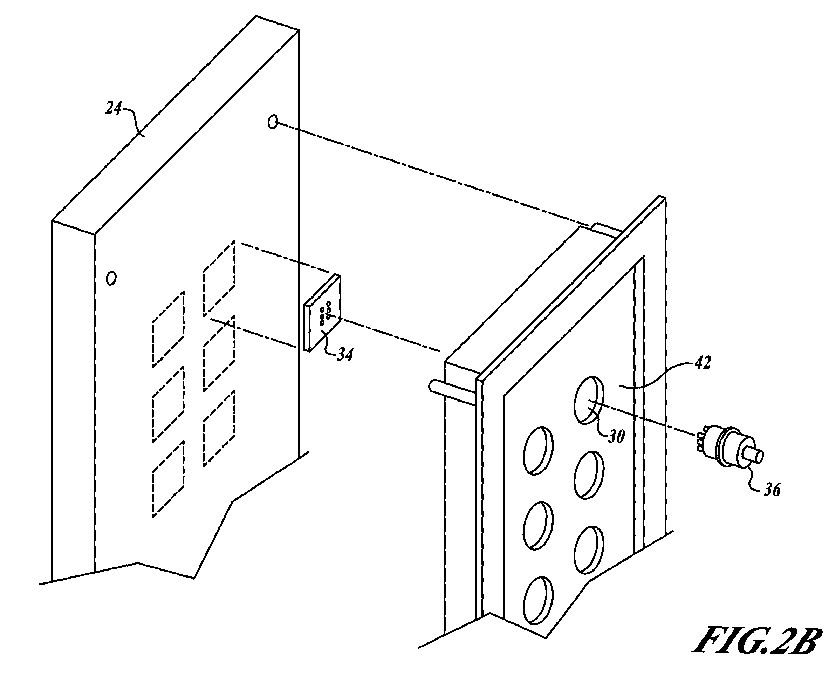

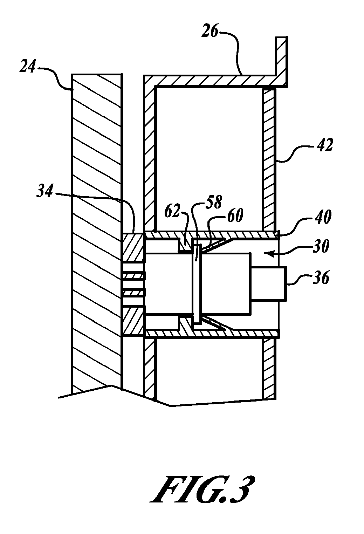

FIGURES 2A, 2B and 3 illustrate a fiber optic module connection system 20 formed in accordance with an embodiment of the present invention. The system 20 is included and applied at a back plane CCA 24 through a connector housing 26 of a chassis (not shown) for LRUs (not shown). The system 20 allows for easy removable and replacement of fiber-optic modules.

An optical module socket 34 is soldered to the back plane CCA 24 at a location relative to a corresponding hole 30 within the connector housing 26 previously designated for a fiber-optic module 36. The optical module socket 34 is attached to an external surface of the back plane CCA 24 by any of a number of attachment techniques, such as soldering or adhesive. The socket 34 includes lead receptacles that receive electrical leads (pins) of the fiber-optic module 36. The lead receptacles of the socket 34 are electrically connected through traces in the socket 34 to electrical traces on the back plane CCA 24.

In one embodiment, the fiber-optic module 36 includes at least a partial annular flange 58 that is located near the longitudinal middle of the module. The module receiving hole 30 includes a connector shell 40 that is removable or integral with the connector housing 26. The connector shell 40 includes at least a partially annular flange 62. When the fiber-optic module 36 is inserted into the hole 30, the flange58 is pressed against the flange 62. The flange 62 is positioned so that the fiber-optic module 36 will properly seat within the hole 30 so that the leads are received within the socket 34. As the fiber-optic module 36 is being inserted, the flange 58 moves one or more retention clips 60 to the outer edge of hole 30. When the flange 58 is pressed against the flange 62, the flange 58 has cleared past an end of the retention clips 60, thereby allowing the retention clips 60 to move back to their at rest position, thus securing the flange 58 to the flange 62. In order to remove the fiber-optic module 36, a tool or some other mechanism is used to push the retention clips 60 radially outward, so that they no longer are holding the flange 58 to the flange 62.

In one embodiment the components shown in FIGURES 2A, 2B and 3 conform to the ARINC 600 standard in order to fully comply with avionics interface guidelines. For example, the mechanical interface (hole 30) complies with ARINC 600 Size 8 insert standard. The configuration shown in FIGURES 2A, 2B and 3 may be designed in order to conform with other standards or guideline requirements.

An example fiber-optic module includes interface electronics, power conditioning components, an optical transmitter (or receiver), and an optical connector. In one embodiment, the fiber-optic module includes between 6 and 8 pins, but may include more or less pins depending upon the application.

In one embodiment, the connector shell 40 is a rigid plastic or metal sleeve that surrounds the fiber-optic module 36 inside the hole 30.
The embodiments of the invention in which an exclusive property or privilege is claimed are defined as follows:

## Claims

1. A fiber-optic module attachment device comprising;
a back plane circuit card assembly (CCA);
a fiber-optic module having a plurality of external pins located on a first side;
a connector housing being attachable to a first side of the back plane CCA, the connector housing comprising a plurality of holes; and
an optical module socket being attached to the first side of the back plane CCA, the optical module socket comprising a plurality of receiving holes and electrical traces that electrically attach the receiving holes to corresponding electrical traces on the back plane CCA,
wherein the one or more pins of the fiber-optic module are removably received by at least a portion of the plurality of receiving holes of the optical module socket.

2. The device of Claim 1, wherein the optical module socket is soldered to the back plane plate.

3. The device of Claim 1, further comprising a sleeve for securely holding the fiber-optic module within one of the holes of the connector housing.

4. The device of Claim 3, wherein the fiber-optic module is removable with an extraction tool.

5. The device of Claim 3, further comprising a securing device located within one of the plurality of holes of the connector housing, wherein the sleeve includes a retention mechanism for receiving the securing device.

6. The device of Claim 1, wherein the back plane plate is part of a chassis that houses one or more replaceable sub-assemblies.

7. The device of Claim 6, wherein the connector housing complies with ARINC requirements.
